# EUROPÄISCHE PATENTANMELDUNG

(11) **EP 2 424 230 A2**
(43) Veröffentlichungstag der Anmeldung: **29.02.2012**
(21) Anmeldenummer: 11006920.0
(22) Anmeldetag: 24.08.2011
(51) Int. Cl.: H04N 5/3745, H04N 5/378

(54) **Bildsensor und Verfahren zum Auslesen eines Bildsensors**

(30) Priorität: 30.08.2010 DE 102010035811
(71) Anmelder: Arnold & Richter Cine Technik GmbH & Co. Betriebs KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Ein Bildsensor für elektronische Kameras umfasst eine Vielzahl von in Zeilen und Spalten angeordneten Pixeln, wobei mehreren Pixeln einer Spalte wenigstens eine gemeinsame Spaltenleitung zugeordnet ist. Ein jedes Pixel umfasst ein lichtempfindliches Detektorelement, um aus einfallendem Licht elektrische Ladung zu erzeugen, eine Auswahleinrichtung, um das Detektorelement direkt oder indirekt mit der zugeordneten Spaltenleitung zu verbinden, und zumindest eine Schalteinrichtung. Der Bildsensor weist ferner eine Steuereinrichtung zum Steuern der Auswahleinrichtung und der zumindest einen Schalteinrichtung des jeweiligen Pixels auf. Die Steuereinrichtung ist derart ausgelegt, dass die Auswahleinrichtung eines ersten Pixels innerhalb eines Zeitraums aktiviert wird, in dem in einem zweiten Pixel, dem dieselbe Spaltenleitung zugeordnet ist, die zumindest eine Schalteinrichtung aktiviert ist.

## Beschreibung

Die vorliegende Erfindung betrifft einen Bildsensor, insbesondere CMOS-Bildsensor, für elektronische Kameras, mit einer Vielzahl von in Zeilen und Spalten angeordneten Pixeln, wobei mehreren Pixeln einer Spalte wenigstens eine gemeinsame Spaltenleitung zugeordnet ist. Ein jedes Pixel umfasst ein lichtempfindliches Detektorelement, um aus einfallendem Licht elektrische Ladung zu erzeugen, eine Auswahleinrichtung, um das Detektorelement direkt oder indirekt mit der zugeordneten Spaltenleitung zu verbinden, und zumindest eine Schalteinrichtung. Der Bildsensor weist ferner eine Steuereinrichtung zum Steuern der Auswahleinrichtung und der zumindest einen Schalteinrichtung des jeweiligen Pixels auf. Die Erfindung betrifft ferner ein Verfahren zum Auslesen eines Bildsensors, der eine Vielzahl von in Zeilen und Spalten angeordneten Pixeln umfasst.

Eine elektronische Kamera wird beispielsweise dazu verwendet, um Bildsequenzen digital aufzuzeichnen, die später in einem Kino vorgeführt werden. Dabei ist es vorteilhaft, wenn diese Kamera neben einer hohen Lichtempfindlichkeit und Dynamik auch eine hohe Bildfrequenz aufweist. Dies ist insbesondere für Aufnahmen wichtig, die später in Zeitlupe wiedergegeben werden sollen. Eine weitere Anwendung, bei der sehr hohe Bildfrequenzen notwendig sind, ist beispielsweise die Aufnahme von Automobil-Crash-Tests.

Der Bildsensor einer derartigen Kamera wandelt dabei durch das Objektiv der Kamera fallendes Licht in elektrische Signale um und besteht aus einer Vielzahl von lichtempfindlichen Elementen, den sogenannten Pixeln, die üblicherweise in Zeilen und Spalten angeordnet sind und das Bildfeld bilden. Typischerweise werden auf Siliziumbasis in CMOS- oder CCD-Technologie hergestellte Bildsensoren verwendet.

Zum Auslesen eines von der Kamera aufgenommenen Bildes werden die Pixel beispielsweise der Reihe nach adressiert und eine zu der Ladung des jeweiligen Pixels proportionale Spannung erzeugt, die zu einem Ausgang des Bildsensors geleitet wird. Die in Spalten angeordneten Pixel sind wenigstens einer gemeinsamen Spaltenleitung zugeordnet und mit dieser wahlweise verbindbar. Die Spaltenleitungen bilden den sogenannten Spaltenbus und leiten die Signale der Pixel zu einer am Rand des Bildfelds angeordneten Signalverarbeitungsschaltung.

Bei einem derartigen Bildsensor wird die Bildfrequenz im Wesentlichen durch zwei Faktoren begrenzt, nämlich durch die Durchsatzrate des Spaltenbusses und durch die Durchsatzrate der am Rand des Bildfelds vorgesehenen Signalverarbeitungsschaltung.

Der Durchsatz bei der Signalverarbeitung kann gesteigert werden, indem mehrere parallel arbeitende Signalverarbeitungsschaltungen jeweiligen Gruppen von Spaltenleitungen zugeordnet werden.

Schwieriger ist es jedoch, die Durchsatzrate des Spaltenbusses zu steigern. Beispielsweise gibt es die Möglichkeit, die Spaltenleitungen in der Mitte zu teilen und den oberen Teil des Bildfeldes über am oberen Bildrand vorgesehene Signalverarbeitungsschaltungen auszulesen, während der untere Teil des Bildfelds über am unteren Bildrand vorgesehene Signalverarbeitungsschaltungen ausgelesen wird.

Weiterhin ist es bekannt, einer Spalte zwei oder sogar vier parallele Spaltenleitungen zuzuordnen, mit denen dann jeweils zwei oder vier Zeilen simultan ausgelesen werden können. Allerdings verdecken diese Leitungen einen Teil der lichtempfindlichen Fläche des Pixels und reduzieren so die Lichtempfindlichkeit und die Dynamik. Daher sind einer weiteren Erhöhung der Anzahl paralleler Spaltenleitungen Grenzen gesetzt.

Ein Bildsensor der eingangs genannten Art ist zum Beispiel in DE 10 2007 045 448 A1 beschrieben und kann beispielsweise wie in Fig. 1 dargestellt aufgebaut sein, in der stellvertretend lediglich ein einziges Pixel 11 dargestellt ist. Das dargestellte Pixel 11 umfasst ein lichtempfindliches Detektorelement in Form einer Photodiode, insbesondere einer sogenannten Pinned-Diode (PD) 15, die über eine Schalteinrichtung in Form eines Transfer-Gates 39 mit einem Ausleseknoten 41, der insbesondere als eine sogenannte Floating Diffusion (FD) ausgebildet ist, ladungsgekoppelt ist.

Der Ausleseknoten 41 ist mit dem Gate eines als Source-Follower ausgebildeten Wandler-Feldeffekttransistors (FET) 43, der eine Ladungs-Spannungs-Wandlerschaltung darstellt, verbunden. Darüber hinaus ist der Ausleseknoten 41 über eine weitere Schalteinrichtung in Form eines Rücksetz-FETs 45 mit einer positiven Spannungsversorgung 51 verbunden. Einer der beiden Kanalanschlüsse des Wandler-FETs 43 ist ebenfalls mit der positiven Versorgung 51 verbunden, wohingegen der andere der beiden Kanalanschlüsse des Wandler-FETs 43 über einen Auswahl-FET 47, der als Zeilenauswahlschalter fungiert, mit der dem dargestellten Pixel zugeordneten Spaltenleitung 17 verbindbar ist.

Die Spaltenleitung 17 ist dafür vorgesehen, die in einer zugehörigen Spalte angeordneten Pixel, insbesondere Pixel 11, mit einer gemeinsamen Spaltenverstärkerschaltung 113 zu verbinden. Die Spaltenverstärkerschaltung 113 umfasst einen ersten Kondensator 127, der mit einem Anschluss gegen Masse geschaltet und mit dem anderen Anschluss über einen Schalter 149E wahlweise mit der Spaltenleitung 17 verbindbar ist. Die Spaltenverstärkerschaltung 113 umfasst ferner einen zweiten Kondensator 133, der mit einem Anschluss ebenfalls gegen Masse geschaltet und mit dem anderen Anschluss über einen weiteren Schalter 149D ebenfalls wahlweise mit der Spaltenleitung 17 verbindbar ist.

Darüber hinaus umfasst die Spaltenverstärkerschaltung 113 einen Verstärker 131, an dessen negativem Eingang 137 die an dem ersten Kondensator 127 anliegende Spannung und an dessen positivem Eingang 135 die an dem zweiten Kondensator 133 anliegende Spannung eingegeben wird.

Das Transfer-Gate 39 ist über eine Steuerleitung TRF, der Rücksetz-FET 45 ist über eine Steuerleitung RES, der Auswahl-FET 47 über ist eine Steuerleitung SEL, der Schalter 149E ist über eine Steuerleitung S1 und der Schalter 149D ist über eine Steuerleitung S2 von einer gemeinsamen Steuereinrichtung 153 des Bildsensors steuerbar.

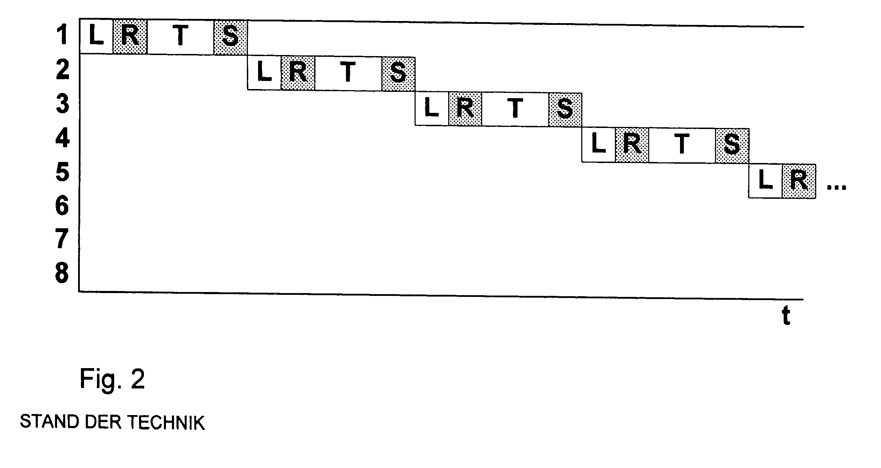

Nachfolgend wird das Funktionsprinzip eines derartigen Pixels 11 exemplarisch, basierend auf einer 3,3 V-CMOS-Technologie, beschrieben. Dieses Verfahren wird auch als "Correlated Double Sampling" (CDS) bezeichnet. In Fig. 2 sind die hierzu erforderlichen Funktionsschritte beispielhaft für einen Sensor mit acht Pixelzeilen in zeitlicher Abfolge dargestellt. Typischerweise werden alle Pixel in einer Zeile auf die gleiche Weise und insbesondere parallel ausgelesen, so dass es für die Beschreibung des Auslesevorgangs ausreicht, nur diejenigen Pixel zu betrachten, die mit derselben Spaltenleitung verbunden sind.

Zunächst wird das während eines Belichtungsvorgangs einfallende Licht durch die Pinned-Diode 15 in elektrische Ladung umgewandelt, sodass sich die Pinned-Diode 15 mit Elektronen füllt. Während der Belichtung werden die Steuerleitungen TRF, RES und SEL jeweils auf 0 V gehalten, d.h. die hierdurch angesteuerten Schalter 39, 45, 47 sind geöffnet.

Zum Auslesen wird in einem ersten Schritt (L; Löschen des Ausleseknotens) an die Steuerleitung RES kurz eine Spannung von 3,3 V angelegt, um durch Leckströme und/oder Streulicht gebildete Ladung aus dem Ausleseknoten 41 zu entfernen oder den Ausleseknoten 41 zu löschen. Der Ausleseknoten 41 wird also auf einen durch die Versorgungsspannung 51 definierten Referenzwert gesetzt.

In einem zweiten Schritt (R, Lesen eines Referenzwerts) wird an die Steuerleitung SEL eine Spannung von 3,3 V angelegt, sodass der Schalter 47 geschlossen wird. Zusätzlich wird der Schalter 149E geschlossen. Hierdurch wird der Spannungspegel des Ausleseknotens 41 über den Wandler-FET 43 und den Auswahl-FET 47 auf die Spaltenleitung 17 geschaltet und somit zum Kondensator 127 geführt. Nachdem das System eingeschwungen ist, wird der Schalter 47 durch ein entsprechendes Steuersignal geöffnet und gleichzeitig der Kondensator 127 durch Öffnen des Schalters 149E wieder von der Spaltenleitung 17 getrennt.

Anschließend wird in einem dritten Schritt (T, Transfer der Ladung) an die Steuerleitung TRF kurz eine Spannung von 3,3 V angelegt, sodass die Elektronen von der Pinned-Diode 15 zu dem Ausleseknoten 41 fließen können. Dieser Transfer der Ladung benötigt in der Regel eine Zeit, die länger ist als die für die vorstehend genannten Funktionsschritte jeweils erforderliche Zeit. Ist die Zeit für den Ladungstransfer zu kurz, erfolgt nur ein unvollständiger Transfer, was zu Bildartefakten führt. Da Bildsensoren üblicherweise getaktet betrieben werden, ist für die vorstehend genannten Schritte L und R jeweils ein Arbeitstakt vorgesehen, während für den Transfer-Schritt zwei Arbeitstakte vorgesehen sind, was in Fig. 2 durch die entsprechende Breite der jeweiligen Symbole dargestellt ist.

Danach werden in einem vierten Schritt (S, Lesen eines Signalwerts) die Schalter 47 und 149D geschlossen. Hierdurch wird der Spannungspegel des Ausleseknotens 41 über den Wandler-FET 43 und den Auswahl-FET 47 auf die Spaltenleitung 17 geschaltet und somit zum Kondensator 133 geführt. Nachdem das System eingeschwungen ist, wird der Kondensator 133 durch Öffnen des Schalters 149D wieder von dem Pixel 11 getrennt. Durch Anlegen von 0 V an die Steuerleitung SEL wird auch der Schalter 47 geöffnet und das Pixel 11 von der Spaltenleitung 17 getrennt.

Am Ausgang des Verstärkers 131 liegt nun eine Spannung an, die der Differenz der in den Kondensatoren 127, 133 gespeicherten Spannung und damit der in der Pinned-Diode 15 erzeugten Ladungsmenge entspricht.

Schließlich kann in einem fünften, in Fig. 2 nicht dargestellten Schritt eine Spannung von 3,3 V kurz an die Steuerleitung RES und TRF angelegt werden, um die Ladung aus den Ausleseknoten 41 und eventuelle Restladung aus der Pinned-Diode 15 zu entfernen, damit der nächste Belichtungsvorgang wieder mit einem völlig "leeren" Pixel beginnen kann.

Nachdem die Schritte 1 bis 5 oder 1 bis 4, wie in Fig. 2 dargestellt, für ein erstes Pixel durchgeführt wurden, werden diese Schritte nachfolgend für das zweite und alle weiteren mit der jeweiligen Spaltenleitung 17 verbundenen Pixel wiederholt.

Der Erfindung liegt die Aufgabe zugrunde, einen Bildsensor bzw. ein Verfahren der eingangs genannten Art zu schaffen, welches die Aufnahme von Bildern mit hoher Bildfrequenz ermöglicht.

Diese Aufgabe wird durch einen Bildsensor mit den Merkmalen des Anspruchs 1 gelöst, und insbesondere dadurch, dass die Steuereinrichtung derart ausgelegt ist, dass die Auswahleinrichtung eines ersten Pixels innerhalb eines Zeitraums aktiviert wird, in dem in einem zweiten Pixel, dem dieselbe Spaltenleitung zugeordnet ist, die zumindest eine Schalteinrichtung aktiviert ist.

Ferner wird die Aufgabe der Erfindung durch die Merkmale des unabhängigen Verfahrensanspruchs gelöst.

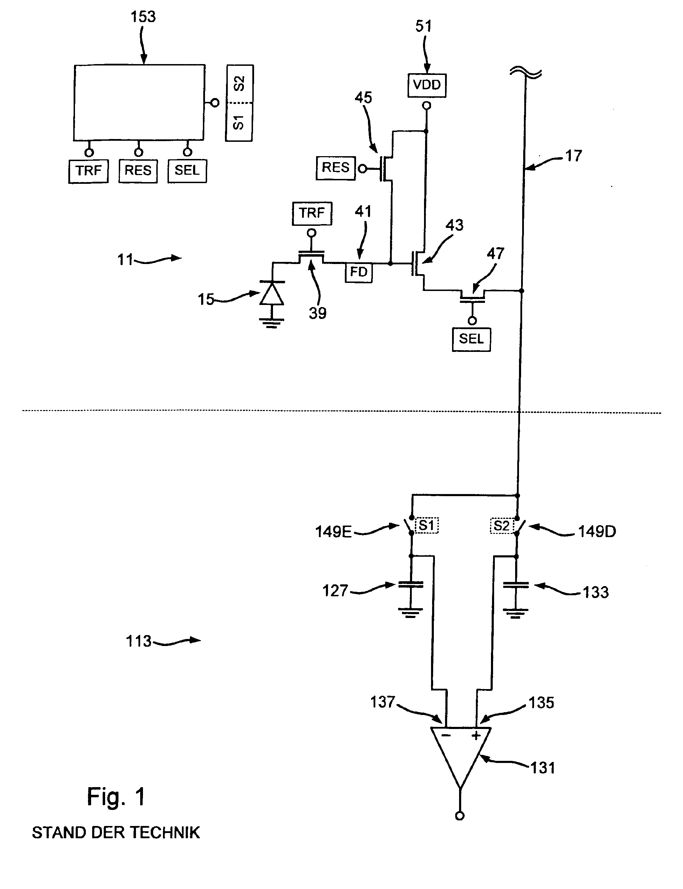

Der Erfindung liegt die Erkenntnis zugrunde, dass insbesondere während der Aktivierung der zumindest einen Schalteinrichtung zur Ausführung pixelinterner Schaltvorgänge, zum Beispiel während des Löschens oder Rücksetzens eines Ausleseknotens auf einen Referenzwert (Schritt 1 bzw. L) und/oder des Transferierens der elektrischen Ladung von dem Detektorelement zu einem Ausleseknoten (Schritt 3 bzw. T), bei einem Pixel die Spaltenleitung nicht genutzt ist, so dass in diesem Zeitraum ein anderes Pixel mit der Spaltenleitung verbunden werden kann. Umgekehrt kann während des Auslesens eines Messsignals bei einem Pixel (Signalwert-Messsignal oder Referenzwert-Messsignal) bereits eine Aktivierung von Schaltvorgängen bei einem anderen Pixel erfolgen, beispielsweise eine Aktivierung einer Rücksetzeinrichtung zum Rücksetzen eines Ausleseknotens auf einen Referenzwert (Schritt 1 bzw. L) und/oder eine Aktivierung eines Transfer-Gates (Schritt 3 bzw. T). Es sind also mehrere Pixel einer Spalte gleichzeitig aktiv. Dadurch wird eine zeitliche Verschränkung der zum Auslesen der Pixel erforderlichen Schaltvorgänge, welche insbesondere die vorstehend beschriebenen Schritte 1 bis 4 umfassen, ermöglicht, sodass letztendlich die Spaltenleitungen wesentlich effizienter genutzt werden als bei einer sequentiellen Aktivierung der Pixel, wie sie vorstehend mit Bezug auf Fig. 1 und 2 beschrieben wurde. Somit kann die Bildfrequenz, mit welcher der Bildsensor betrieben wird, deutlich erhöht werden.

In der Regel wird das zweite Pixel nach dem ersten Pixel ausgelesen, wobei für die Zählung der zeitlichen Reihenfolge ein bestimmter Schritt, insbesondere hier das Rücksetzen des Ausleseknotens auf einen Referenzwert (Schritt 1 bzw. L) maßgeblich ist. Grundsätzlich ist die Auslesereihenfolge der Pixel aber beliebig, d.h. das genannte "zweite Pixel" kann auch vor dem genannten "ersten Pixel" ausgelesen werden.

Das vorgenannte Steuerungsprinzip wird vorzugsweise für mehrere, insbesondere für sämtliche Pixel des Bildsensors befolgt.

Ein Aktivieren der genannten Schalteinrichtung des jeweiligen Pixels bewirkt vorzugsweise eine Änderung der Verteilung von elektrischer Ladung innerhalb des jeweiligen Pixels.

Gemäß einer vorteilhaften Ausführungsform der Erfindung umfasst die genannte zumindest eine Schalteinrichtung ein Transfer-Gate, um elektrische Ladung von dem Detektorelement zu einem Ausleseknoten zu transferieren, und/oder eine Rücksetzeinrichtung, um eine in dem Ausleseknoten oder dem Detektorelement vorhandene Ladung auf einen Referenzwert rückzusetzen, und/oder eine Wandlerschaltung, um wenigstens ein Messsignal zu erzeugen, das einer in dem Ausleseknoten oder dem Detektorelement vorhandenen Ladung proportional ist, wobei die Auswahleinrichtung zum Verbinden der Wandlerschaltung mit der zugeordneten Spaltenleitung ausgelegt ist.

Unter einer indirekten Verbindung des Detektorelements mit der Spaltenleitung wird demnach eine Verbindung verstanden, bei der die im Detektorelement generierte Ladung durch Aktivieren des Transfer-Gates zunächst zu einem Ausleseknoten transferiert wird, und die transferierte Ladung dann durch Aktivieren der Auswahleinrichtung entweder direkt oder wiederum indirekt (insbesondere nach Umwandlung in das genannte Messsignal mittels der Wandlerschaltung) auf die Spaltenleitung gelegt wird.

Grundsätzlich ist die Erfindung also nicht auf einen Sensor mit einer Vier-Transistor-Pixelarchitektur beschränkt, sondern kann bei Sensoren mit verschiedenen Pixelarchitekturen wie zum Beispiel Zwei-, Drei- oder Fünf-Transistor-Pixeln zum Einsatz gelangen. Es kann sich dabei sowohl um APS-Sensoren (von "active pixel sensor", Sensor mit aktiven Pixeln), d.h. Sensoren mit einer Verstärkung der vom Detektorelement generierten Ladung in dem jeweiligen Pixel, als auch um PPS-Sensoren (von "passive pixel sensor", Sensor mit passiven Pixeln), d.h. Sensoren ohne Ladungsverstärkung, handeln.

Gemäß einer weiteren vorteilhaften Ausführungsform der Erfindung ist die Steuereinrichtung ferner derart ausgelegt, dass innerhalb des genannten Zeitraums zusätzlich zumindest eine Schalteinrichtung (beispielsweise eine Rücksetzeinrichtung) eines dritten Pixels, dem dieselbe Spaltenleitung zugeordnet ist, aktiviert wird, insbesondere während die Auswahleinrichtung des ersten Pixels aktiviert ist (d.h. während des Ausgebens eines Messsignals des ersten Pixels an oder über die zugeordnete Spaltenleitung). Dadurch werden die Aktivierungen der jeweiligen Pixel zeitlich noch enger miteinander verzahnt.

Gemäß einer weiteren vorteilhaften Ausführungsform der Erfindung ist die Steuereinrichtung dazu ausgelegt, die Auswahleinrichtung eines jeweiligen Pixels zeitlich nach (vorzugsweise unmittelbar nach) dem Aktivieren der genannten Rücksetzeinrichtung dieses Pixels zu aktivieren, um ein Referenzwert-Messsignal aus diesem Pixel auszulesen, und die Auswahleinrichtung eines jeweiligen Pixels zeitlich nach (vorzugsweise unmittelbar nach) dem Anlegen des genannten Transfersteuer-Steuersignals an das Transfer-Gate dieses Pixels zu aktivieren, um ein Signalwert-Messsignal aus diesem Pixel auszulesen. Mit anderen Worten erfolgt das Auslesen des Referenzwert-Messsignals nach dem Rücksetzen dieses Pixels auf den Referenzwert und das Auslesen eines Signalwert-Messsignals aus diesem Pixel nach dem Transferieren der Ladung von dem Detektorelement in den Ausleseknoten.

Gemäß einer weiteren vorteilhaften Ausführungsform umfasst die genannte zumindest eine Schalteinrichtung des jeweiligen Pixels wenigstens ein Transfer-Gate, um elektrische Ladung von dem Detektorelement zu einem Ausleseknoten des Pixels zu transferieren, und eine Rücksetzeinrichtung, um eine in dem Ausleseknoten oder dem Detektorelement des Pixels vorhandene Ladung auf einen Referenzwert rückzusetzen. Die Steuereinrichtung ist bei dieser Ausführungsform dazu ausgelegt, die Auswahleinrichtung eines jeweiligen Pixels (z.B. des genannten ersten Pixels) nach einem Aktivieren der Rücksetzeinrichtung dieses Pixels zu aktivieren, um ein Referenzwert-Messsignal aus diesem Pixel auszulesen, und die Auswahleinrichtung dieses Pixels nach dem Anlegen eines Transfer-Steuersignals an das Transfer-Gate dieses Pixels zu aktivieren, um ein Signalwert-Messsignal aus diesem Pixel auszulesen.

Gemäß einer weiteren vorteilhaften Ausführungsform ist die Steuereinrichtung dazu ausgelegt, aus dem zweiten Pixel das Referenzwert-Messsignal zeitlich nach dem Auslesen des Referenzwert-Messsignals aus dem ersten Pixel und zeitlich vor dem Auslesen des Signalwert-Messsignals aus dem ersten Pixel auszulesen. In diesem Fall wird also der Zeitraum zwischen den beiden Auslesevorgängen des ersten Pixels, der üblicherweise für den Ladungstransfer zwischen Detektorelement und Ausleseknoten benötigt wird, für das Auslesen des Referenzwert-Messsignals aus dem zweiten Pixel genutzt.

Alternativ oder zusätzlich kann die Steuereinrichtung dazu ausgelegt sein, aus einem dritten Pixel das Referenzwert-Messsignal nach dem Auslesen des Signalwert-Messsignals aus dem ersten Pixel und vor dem Auslesen des Signalwert-Messsignals aus dem zweiten Pixel auszulesen.

Gemäß einer weiteren vorteilhaften Ausführungsform ist die gemeinsame Spaltenleitung mit einer von der Steuereinrichtung steuerbaren Spaltenverstärkerschaltung verbindbar. Diese Spaltenverstärkerschaltung umfasst einen Verstärker, einen mit einem ersten Eingang des Verstärkers verbundenen oder verbindbaren ersten Signalspeicher zum Speichern des Signalwert-Messsignals und zumindest einen (vorzugsweise mehrere) wahlweise mit einem zweiten Eingang des Verstärkers verbindbaren zweiten Signalspeicher zum Speichern des Referenzwert-Messsignals. Vorzugsweise ist die gemeinsame Spaltenleitung wahlweise mit dem ersten oder einem der zweiten Signalspeicher verbindbar. Somit können ein oder mehrere Referenzwert-Messsignale so lange zwischengespeichert werden, bis das jeweils zugehörige Signalwert-Messsignal ausgelesen ist. Bei dem Verstärker kann es sich beispielsweise um einen Differenzverstärker handeln. Die Signalspeicher können bevorzugt als jeweiliger Kondensator ausgebildet sein. Bevorzugt sind zwei oder drei zweite Signalspeicher vorgesehen.

Gemäß einer weiteren vorteilhaften Ausführungsform ist der zweite Signalspeicher dazu ausgelegt, das aus einem Pixel ausgelesene Referenzwert-Messsignal zumindest so lange zwischenzuspeichern, bis das Messwert-Messsignal aus einem unmittelbar vorhergehend ausgelesenen Pixel und/oder das Signalwert-Messsignal aus demselben Pixel und/oder das Referenzwert-Messsignal aus einem unmittelbar nachfolgend ausgelesenen Pixel ausgelesen sind. Dadurch ist eine sehr enge Verschränkung der jeweiligen Schaltvorgänge unterschiedlicher Pixel möglich, sodass die Spaltenleitung auf besonders effiziente Weise ausgenutzt werden kann.

Gemäß einer weiteren vorteilhaften Ausführungsform ist die Steuereinrichtung dazu ausgelegt, das zwischengespeicherte Referenzwert-Messsignal eines Pixels gleichzeitig mit oder unmittelbar vor oder unmittelbar nach dem Signalwert-Messsignal desselben Pixels an den Spaltenverstärker zu übermitteln. Dadurch wird sichergestellt, dass das Referenzwert-Messsignal zum richtigen Zeitpunkt an einem Eingang des Verstärkers zur Verfügung steht.

Gemäß einer weiteren vorteilhaften Ausführungsform der Erfindung ist die gemeinsame Spaltenleitung mit einer von der Steuereinrichtung steuerbaren Auswerteschaltung verbunden oder verbindbar, welche zum unmittelbaren Digitalisieren der von der Spaltenleitung empfangenen Messsignale ausgelegt ist, wobei die digitalisierten Messsignale für eine nachfolgende Verarbeitung zwischenspeicherbar sind. In dem Fall ist eine Pufferung der Messsignale auf analoger Ebene nicht erforderlich, da diese unmittelbar von der Spaltenleitung an den Eingang einer entsprechenden Digitalisierschaltung angelegt werden können. Eine Differenzbildung zwischen dem Signalwert-Messsignal und dem Referenzwert-Messsignal eines jeweiligen Pixels erfolgt auf digitaler Ebene, wobei die Auswerteschaltung die Zuordnung der digitalisierten Messsignale übernimmt.

Die Erfindung bezieht sich auch auf einen Bildsensor, insbesondere einen CMOS-Bildsensor, für elektronische Kameras, mit einer Vielzahl von in Zeilen und Spalten angeordneten Pixeln, wobei mehreren Pixeln einer Spalte wenigstens eine gemeinsame Spaltenleitung zugeordnet ist und wobei ein jedes Pixel ein lichtempfindliches Detektorelement aufweist, um aus einfallendem Licht elektrische Ladung zu erzeugen. Gemäß einer Ausführungsform wird in einem ersten Pixel ein Ausleseschritt zu einem solchen Zeitpunkt durchgeführt, zu dem in einem zweiten Pixel, dem dieselbe Spaltenleitung zugeordnet ist wie dem ersten Pixel, ein Auslesevorbereitungsschritt durchgeführt wird. Hierbei erfolgt in einem Ausleseschritt ein Auslesen der elektrischen Ladung über die zugeordnete Spaltenleitung, z.B. durch Aktivieren einer Auswahleinrichtung des jeweiligen Pixels. Für einen Auslesevorbereitungsschritt wird in dem jeweiligen Pixel z.B. eine Schalteinrichtung aktiviert, insbesondere um die Ladung in dem Detektorelement oder in einem Ausleseknoten des jeweiligen Pixels zu löschen oder um die in dem jeweiligen Pixel erzeugte elektrische Ladung zu einem Ausleseknoten des Pixels zu transferieren. Somit werden in zwei verschiedenen Pixeln ein Ausleseschritt und ein Auslesevorbereitungsschritt teilweise oder vollständig zeitgleich durchgeführt. Der Auslesevorgang (Gesamtheit aller Auslesevorbereitungsschritte und Ausleseschritte) in dem ersten Pixel und der Auslesevorgang in dem zweiten Pixel überlappen also zeitlich.

Insbesondere kann eine Steuereinrichtung des Bildsensors dazu ausgelegt sein, aus einem ersten der Pixel durch Aktivieren einer jeweiligen Auswahleinrichtung ein Messsignal an die zugeordnete Spaltenleitung innerhalb eines Zeitraums auszugeben (=Ausleseschritt), in dem in einem zweiten der Pixel, dem dieselbe Spaltenleitung zugeordnet ist wie dem ersten Pixel, durch Aktivieren zumindest einer Schalteinrichtung die Verteilung von elektrischer Ladung innerhalb des zweiten Pixels geändert wird (=Auslesevorbereitungsschritt). Vorzugsweise wird durch das Aktivieren der Schalteinrichtung des zweiten Pixels eine elektrische Ladung in dem Detektorelement oder in einem Ausleseknoten des zweiten Pixels gelöscht, oder es wird eine in dem Detektorelement des zweiten Pixels erzeugte elektrische Ladung zu einem Ausleseknoten des zweiten Pixels transferiert.

Gemäß einer alternativen Ausführungsform, oder zusätzlich zu der vorgenannten Ausführungsform, werden für jeden Belichtungsvorgang des Bildsensors in jedem Pixel mehrere Ausleseschritte zeitlich nacheinander durchgeführt, wobei zwischen den mehreren Ausleseschritten in einem ersten Pixel wenigstens ein Ausleseschritt in einem zweiten Pixel durchgeführt wird.

Die Erfindung bezieht sich auch auf ein entsprechendes Verfahren zum Auslesen eines Bildsensors für elektronische Kameras, wobei der Bildsensor eine Vielzahl von in Zeilen und Spalten angeordneten Pixeln umfasst, wobei mehreren Pixeln einer Spalte wenigstens eine gemeinsame Spaltenleitung zugeordnet ist, wobei in jedem Pixel für einen jeweiligen Belichtungsvorgang des Bildsensors mehrere Messsignale erzeugt werden, und die Messsignale in einem jeweiligen Ausleseschritt an die zugeordnete Spaltenleitung ausgegeben werden. Bei dieser Ausführungsform werden für einen einzigen Belichtungsvorgang des Bildsensors in einem ersten der Pixel mehrere Ausleseschritte durchgeführt, um mehrere Messsignale des ersten Pixels nacheinander an die zugeordnete Spaltenleitung auszugeben. Zeitlich zwischen den Ausleseschritten des ersten Pixels wird wenigstens ein Ausleseschritt in einem zweiten der Pixel durchgeführt. Bei diesem Ausleseschritt des zweiten Pixels wird für denselben Belichtungsvorgang ein Messsignal des zweiten Pixels an die zugeordnete Spaltenleitung ausgegeben.

Weitere vorteilhafte Ausführungsformen sind in den Unteransprüchen, der Beschreibung und den Zeichnungen angegeben.

Die Erfindung wird nachfolgend anhand von Ausführungsbeispielen mit Bezug auf die Zeichnungen beschrieben. Es zeigt, jeweils in schematischer Darstellung,
- Fig. 1: einen Vier-Transistor-CMOS-Bildsensor gemäß dem Stand der Technik, wobei von dem Bildsensor lediglich ein Pixel und eine dem Pixel zugeordnete Spaltenverstärkerschaltung dargestellt sind,
- Fig. 2: den zeitlichen Ablauf des Auslesens des Bildsensors von Fig. 1,
- Fig. 3: einen Vier-Transistor-CMOS-Bildsensor gemäß der vorliegenden Erfindung in einer zu Fig. 1 analogen Darstellung,
- Fig. 4: den erfindungsgemäßen zeitlichen Ablauf des Auslesens des Bildsensors gemäß Fig. 1 in einer zu Fig. 2 analogen Darstellung, und

- Fig. 5: einen Vier-Transistor-CMOS-Bildsensor gemäß einer Ausführungsvariante der vorliegenden Erfindung in einer zu Fig. 1 und 3 analogen Darstellung.

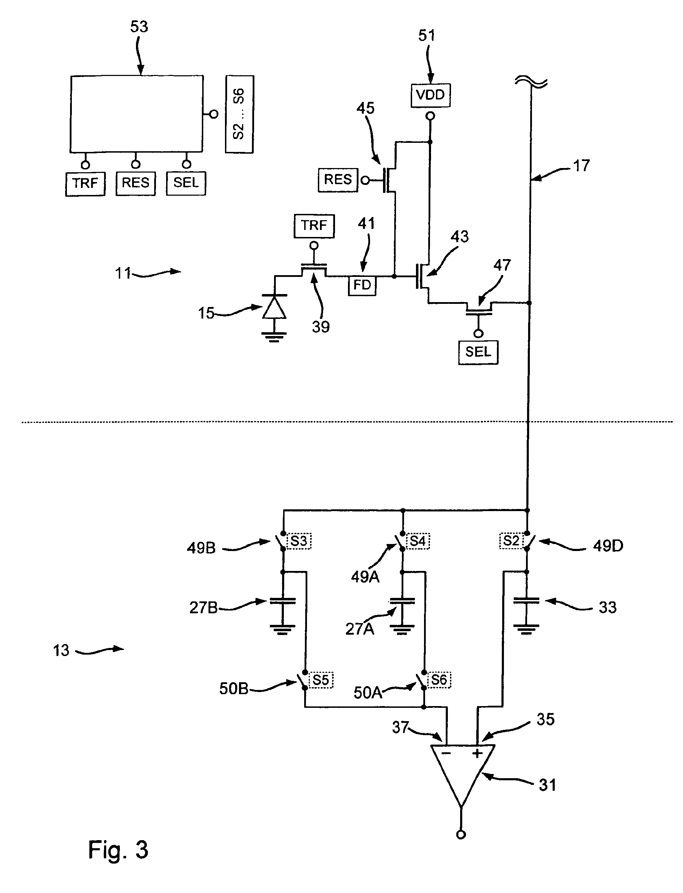

Der in Fig. 3 dargestellte erfindungsgemäße Bildsensor umfasst ein Pixel 11 und eine Spaltenleitung 17, welche den in Fig. 1 zum Stand der Technik beschriebenen Pixel 11 bzw. der Spaltenleitung 17 entsprechen. Darüber hinaus umfasst der Bildsensor gemäß Fig. 3 eine Verstärkerschaltung 13, die eine so genannte Sample-and-Hold-Schaltung bildet. Die Verstärkerschaltung 13 umfasst einen dem Verstärker 131 aus Fig. 1 entsprechenden Verstärker 31 mit einem positiven Eingang 35 und einem negativen Eingang 37, einen dem Kondensator 133 aus Fig. 1 entsprechenden Signalwert-Kondensator 33, zwei dem Kondensator 127 aus Fig. 1 entsprechenden Referenzwert-Kondensatoren 27A, 27B, einen dem Schalter 149D aus Fig. 1 entsprechenden Schalter 49D und zwei dem Schalter 149E entsprechende Schalter 49A und 49B. Anstelle der direkten Verbindung des Kondensators 127 mit dem negativen Eingang 137 des Verstärkers 131 von Fig. 1 ist in Fig. 3 in den Verbindungen der Kondensatoren 27A, 27B mit dem negativen Eingang 37 des Verstärkers 31 zusätzlich jeweils ein Schalter 50A bzw. 50B vorgesehen.

Außerdem umfasst der Bildsensor gemäß Fig. 3 eine der Steuereinrichtung 153 aus Fig. 1 entsprechende Steuereinrichtung 53, die neben den bereits zu Fig. 1 beschriebenen Bauelementen auch die Schalter 49A, 49B und die Schalter 50A, 50B über Steuerleitungen S3, S4, S5, S6 anstelle der in Fig. 1 vorgesehenen Steuerleitungen S1 und S2 steuert.

Die vorstehenden Bauelemente sind, sofern nichts anderes erwähnt ist, in derselben Art untereinander verbunden, wie die entsprechenden Bauelemente aus Fig. 1. Die vorstehenden Ausführungen zu Fig. 1 sind deshalb auch Teil der Offenbarung der Erfindung.

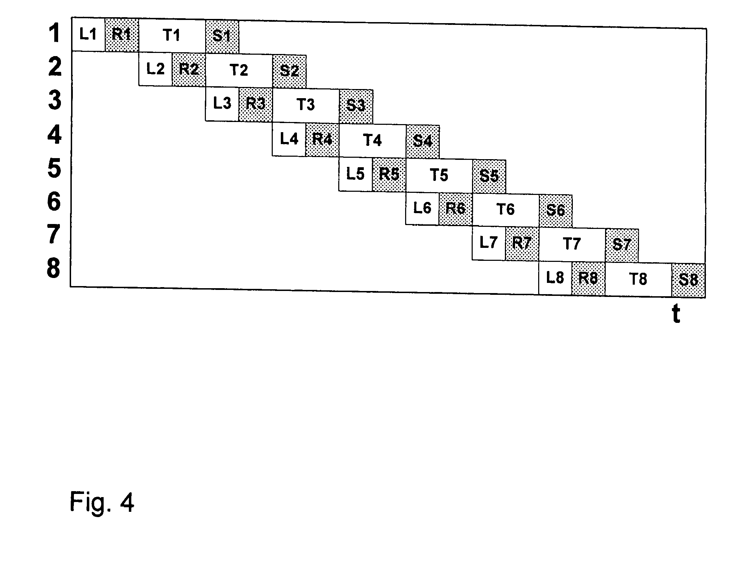

Nachfolgend wird die Funktionsweise des Pixels 11 des erfindungsgemäßen Bildsensors von Fig. 3 anhand des in Fig. 4 dargestellten Zeitdiagramms beschrieben, wobei die Pixel nach einem Belichtungsvorgang des Bildsensors zeilenweise ausgelesen werden und wobei das Pixel 11 jeweils stellvertretend für die in Fig. 4 auf der Y-Achse aufgetragenen, von 1 bis 8 durchnummerierten Pixel einer Spalte steht. Die Pixel gemäß Fig. 4 werden also über dieselbe Spaltenleitung 17 (Fig. 3) ausgelesen.

In Fig. 4 stehen die Symbole "L" und "T" für das Löschen oder Rücksetzen des Ausleseknotens 41 auf einen Referenzwert bzw. für das Aktivieren des Transfer-Gates 39 zum Transferieren von elektrischer Ladung von der Pinned-Diode 15 zum Ausleseknoten 41 (so genannte Auslesevorbereitungsschritte). Bei diesen Schritten wird eine Verteilung der elektrischen Ladung innerhalb des Pixels 11 geändert. Analog zu Fig. 2 sind auch ein Symbol "R" zur Kennzeichnung des Auslesens des Referenzwert-Messsignals und ein Symbol "S" zur Kennzeichnung des Auslesens des Signalwert-Messsignals vorgesehen (so genannte Ausleseschritte). Die genannten Symbole sind durch einen das jeweilige Pixel (d.h. die jeweilige Zeile) kennzeichnenden Index ergänzt. Durch Schraffur des jeweiligen Taktzyklus ist in Fig. 4 die Belegung der betreffenden Spaltenleitung 17 für einen jeweiligen Ausleseschritt illustriert, nämlich für das Auslesen des jeweiligen Referenzwert-Messsignals ("R") oder für das Auslesen des jeweiligen Signalwert-Messsignals ("S") eines Pixels der betrachteten Spalte.

Unter dem "Auslesen eines Messsignals" ist im Zusammenhang mit der Erfindung das Übertragen des analogen Messsignals von dem jeweiligen Pixel 11 an die zugeordnete Spaltenleitung 17 zu verstehen. Am Ende der Spaltenleitung 17 wird das Messsignal an den zugeordneten Spaltenverstärker 31 oder die zugeordnete Verstärkerschaltung 13 (Sample-and-Hold-Schaltung) geliefert.

Die beim Auslesen der Pixel ausgeführten Schritte L, R, T und S entsprechen den eingangs mit Bezug auf Fig. 2 erläuterten Schritten 1 bis 4 (L, R, T, S), sodass die jeweils zugehörigen Schaltvorgänge nicht näher erläutert werden, sofern sie die bereits mit Bezug auf Fig. 2 erläuterten Komponenten betreffen. Üblicherweise wird der Bildsensor getaktet betrieben, wobei jeder Taktzyklus die gleiche Länge aufweist. Während für die Schritte L, R und S jeweils ein Takt vorgesehen ist, sind für den Schritt T zwei Takte vorgesehen, was in Fig. 4 durch die Länge der die jeweiligen Schritte kennzeichnenden Felder symbolisiert ist. Sofern nichts anderes erwähnt ist, befinden sich die Schalter 49A, 49B, 49D, 50A, 50B der Verstärkerschaltung 13 in ihrem geöffneten Zustand.

Nach einem Belichtungsvorgang sind die Pinned-Dioden 15 der Pixel 1 bis 8 mit Ladung gefüllt.

Der Auslesevorgang beginnt mit der Durchführung des Schritts L1 für Pixel 1. Anschließend erfolgt der Schritt R1, wobei dabei der Schalter 49A durch Anlegen einer Steuerspannung an die Steuerleitung S4 geschlossen ist. Das Referenzwert-Messsignal des Pixels 1 wird somit in dem Kondensator 27A gespeichert.

Nun wird der Schalter 49A wieder geöffnet und für Pixel 1 der zwei Taktzyklen dauernde Schritt T 1 durchgeführt. Während des ersten Taktzyklus des Schritts T1 für Pixel 1 wird für Pixel 2 der Schritt L2 durchgeführt. Während des zweiten Taktzyklus des Schritts T1 für Pixel 1 wird für Pixel 2 der Schritt R2 durchgeführt, für dessen Zeitdauer der Schalter 49B durch entsprechende Ansteuerung der Steuerleitung S3 geschlossen ist. Dadurch wird das Referenzwert-Messsignal des Pixels 2 in dem Kondensator 27B gespeichert.

Nach Beendigung des Schritts T1 für Pixel 1 und des Schritts R2 für Pixel 2 wird für Pixel 1 der Schritt S1 durchgeführt. Während des Schritts S1 ist der Schalter 49D durch entsprechende Ansteuerung der Steuerleitung S2 geschlossen. Das Signalwert-Messsignal des Pixels 1 wird in dem Kondensator 33 gespeichert.

Nach dem Schließen des Schalters 50A mittels der Steuerleitung S6 liegt das Messsignalpaar der Schritte R 1, S 1 des Pixels 1 an den Eingängen 35, 37 des Verstärkers 31 an, welches in verstärkter Form am Ausgang des Verstärkers 31 zur Verfügung steht und welches der durch den Belichtungsvorgang in der Pinned-Diode 15 des Pixels 1 erzeugten Ladungsmenge entspricht. Anschließend werden die Kondensatoren 27A und 33 zur Aufnahme neuer Messsignale wieder frei.

Zeitgleich mit dem Schritt S 1 für Pixel 1 wird für Pixel 2 der erste Taktzyklus des Schritts T2 durchgeführt und in Pixel 3 der Schritt L3 durchgeführt. Nach Ende des Schritts S 1 ist das Auslesen des Pixels 1 im Wesentlichen abgeschlossen. Optional kann jedoch im Anschluss (oder später) noch der eingangs erwähnte fünfte Schritt zum Löschen der Pinned-Diode 15 und des Ausleseknotens 41 durchgeführt werden.

Parallel zum zweiten Taktzyklus des Schritts T2 für Pixel 2 wird in Pixel 3 der Schritt R3 durchgeführt. Während dieses Schrittes ist wiederum der Schalter 49A geschlossen, sodass das Referenzwert-Messsignal im zuvor frei gewordenen Kondensator 27A gespeichert wird.

Nach Beendigung des Schritts T2 für Pixel 2 und des Schritts R3 für Pixel 3 wird nun der Schritt S2 für Pixel 2 durchgeführt. Während dieses Schritts ist wiederum der Schalter 49D geschlossen, sodass das Signalwert-Messsignal im Kondensator 33 gespeichert wird und anschließend an dem Eingang 35 des Verstärkers 31 zur Verfügung steht.

Nach dem Schließen des Schalters 50B durch Anlegen einer Steuerspannung an die Steuerleitung S5 steht das zuvor in dem Kondensator 27B gespeicherte Referenzwert-Messsignal des Pixels 2 an dem Eingang 37 des Verstärkers 31 zur Verfügung. Am Ausgang des Verstärkers 31 liegt nun eine Spannung an, die der durch den Belichtungsvorgang in der Pinned-Diode 15 des Pixels 2 erzeugten Ladungsmenge entspricht. Anschließend werden die Kondensatoren 27B und 33 zur Aufnahme neuer Messsignale wieder frei.

Zeitgleich mit der Einleitung des Schritts S2 für Pixel 2 wird für Pixel 3 der Schritt T3 und für Pixel 4 der Schritt L4 eingeleitet. Während des zweiten Taktzyklus des Schritts T3 für Pixel 3 wird für Pixel 4 der Schritt R4 durchgeführt, wobei zur Zwischenspeicherung des dabei gewonnenen Referenzwert-Messsignals für Pixel 4 der zuvor frei gewordene Kondensator 27B zur Zwischenspeicherung zur Verfügung steht.

Die nachfolgenden Schritte ergeben sich für die Pixel 3 bis 8 in entsprechender Weise, so dass schließlich sämtliche Messsignale für den betreffenden (einzigen) Belichtungsvorgang ausgelesen sind.

Im Rahmen der Erfindung ergeben sich ausgehend von dem vorstehend erläuterten Zeitablauf verschiedene Abwandlungen. So kann beispielsweise der Schritt L2 für Pixel 2 auch erst mit dem Schritt S 1 für Pixel 2 beginnen. Dadurch wird jedoch eine deutlich weniger effiziente Ausnutzung der Spaltenleitung 17 erzielt.

Weiterhin könnte auch der Schritt L2 für Pixel 2 bereits mit dem Schritt R1 für Pixel 1 beginnen, wobei dann jedoch zumindest eine zusätzliche Spaltenleitung erforderlich wäre.

Falls die Zeitdauer bestimmter Schritte von den vorstehend beschriebenen Zeitdauern abweicht, beispielsweise wenn der Transfer-Schritt T drei anstelle von zwei Taktzyklen benötigt, wären auch noch andere Arten von zeitlichen Verschränkungen möglich. Eventuell könnte es dabei erforderlich sein, anstelle der zwei durch die Kondensatoren 27A, 27B gebildeten Pufferspeicher weitere gleichartige Pufferspeicher vorzusehen.

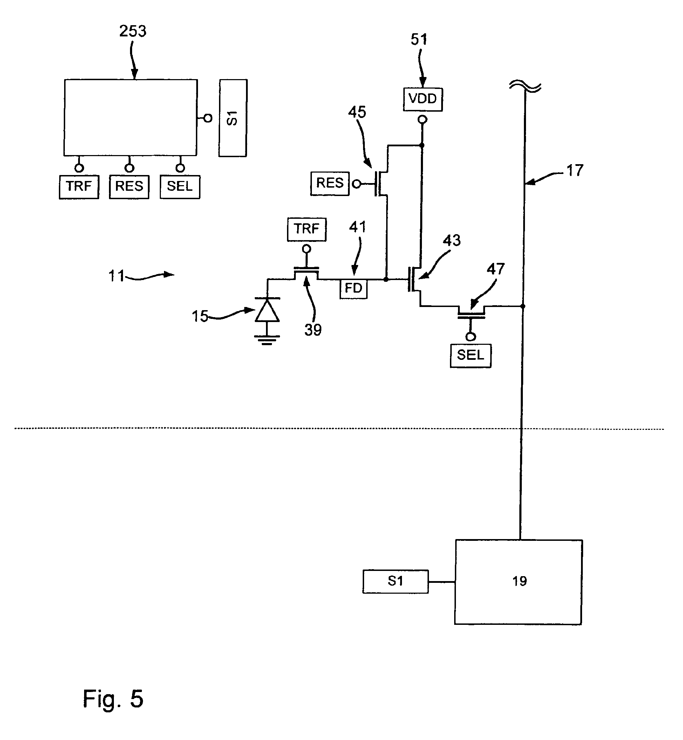

Mit Bezug auf Fig. 5 wird nun ein weiteres Ausführungsbeispiel der Erfindung beschrieben. Dieses Ausführungsbeispiel entspricht dem Ausführungsbeispiel von Fig. 3, wobei die Verstärkerschaltung 13 in Fig. 3 durch eine Auswerteschaltung 19 ersetzt ist, welche unmittelbar mit der Spaltenleitung 17 verbunden ist. Eine Steuereinrichtung 253 entspricht der Steuereinrichtung 153 aus Fig. 1 bzw. der Steuereinrichtung 53 aus Fig. 3, wobei hier lediglich eine Steuerleitung S 1 vorgesehen ist, über welche die Steuereinrichtung 253 mit der Auswerteschaltung 19 kommuniziert.

Bei dieser Ausführungsvariante werden die jeweiligen Referenzwert- und Signalwert-Messsignale vorzugsweise unmittelbar nach dem Auslesen aus dem Pixel 11 (Schritte R und S) an die Auswerteschaltung 19 übermittelt und dort digitalisiert. Eine notwendige Zwischenspeicherung von Referenzwert-Messsignalen erfolgt auf digitaler Ebene, wobei die Auswerteschaltung 19 auch die nachfolgende Zuordnung zu den zugehörigen Signalwert-Messsignalen durchführt.

Die zeitliche Abfolge der Schritte L, R, T und S für die jeweiligen Pixel kann bei dem in Fig. 5 dargestellten Bildsensor auf die gleiche Weise erfolgen, wie es mit Bezug auf Fig. 4 vorstehend beschrieben wurde.

### Bezugszeichenliste

- 11: Pixel
- 13, 113: Spaltenverstärkerschaltung
- 15: Pinned-Diode
- 17: Spaltenleitung
- 19: Auswerteschaltung
- 27A, 27B, 127: Referenzwert-Kondensator
- 31, 131: Verstärker
- 33, 133: Signalwert-Kondensator
- 35, 135: positiver Eingang
- 37, 137: negativer Eingang
- 39: Transfer-Gate
- 41: Ausleseknoten
- 43: Wandler-FET
- 45: Rücksetz-FET
- 47: Auswahl-FET
- 49A, 49B, 49D, 49E: Schalter
- 50A, 50B: Schalter
- 51: positive Versorgung
- 53, 153, 253: Steuereinrichtung

## Patentansprüche

1. Bildsensor, insbesondere CMOS-Bildsensor, für elektronische Kameras,
mit einer Vielzahl von in Zeilen und Spalten angeordneten Pixeln (11), wobei mehreren Pixeln einer Spalte wenigstens eine gemeinsamen Spaltenleitung (17) zugeordnet ist und wobei ein jedes Pixel (11) umfasst:
ein lichtempfindliches Detektorelement (15), um aus einfallendem Licht elektrische Ladung zu erzeugen,
eine Auswahleinrichtung (47), um das Detektorelement (15) direkt oder indirekt mit der zugeordneten Spaltenleitung (17) zu verbinden,
und
zumindest eine Schalteinrichtung (39, 45); und
ferner mit einer Steuereinrichtung (53, 253) zum Steuern der Auswahleinrichtung (47) und der zumindest einen Schalteinrichtung (39, 45) des jeweiligen Pixels (11);
**dadurch gekennzeichnet,**
**dass** die Steuereinrichtung (53, 253) derart ausgelegt ist, dass die Auswahleinrichtung (47) eines ersten Pixels (11) innerhalb eines Zeitraums aktiviert wird, in dem in einem zweiten Pixel (11), dem dieselbe Spaltenleitung (17) zugeordnet ist, die zumindest eine Schalteinrichtung (39, 45) aktiviert ist.

2. Bildsensor nach Anspruch 1,
**dadurch gekennzeichnet,**
**dass** die zumindest eine Schalteinrichtung umfasst:
ein Transfer-Gate (39), um elektrische Ladung von dem Detektorelement (15) zu einem Ausleseknoten (41) zu transferieren,
und/oder
eine Rücksetzeinrichtung (45), um eine in einem Ausleseknoten (41) oder dem Detektorelement (15) vorhandene Ladung auf einen Referenzwert rückzusetzen,
und / oder
eine Wandlerschaltung (43), um wenigstens ein Messsignal zu erzeugen, das einer in einem Ausleseknoten (41) oder dem Detektorelement (15) vorhandenen Ladung proportional ist, wobei die Auswahleinrichtung (47) zum Verbinden der Wandlerschaltung (43) mit der zugeordneten Spaltenleitung (17) ausgelegt ist.

3. Bildsensor nach Anspruch 1 oder 2,
**dadurch gekennzeichnet,**
**dass** die Steuereinrichtung (53, 253) ferner derart ausgelegt ist, dass innerhalb des genannten Zeitraums zusätzlich zumindest eine Schalteinrichtung (39, 45), insbesondere eine Rücksetzeinrichtung (45), eines dritten Pixels (11), dem dieselbe Spaltenleitung (17) zugeordnet ist, aktiviert wird.

4. Bildsensor nach einem der vorhergehenden Ansprüche,
**dadurch gekennzeichnet,**
**dass** die zumindest eine Schalteinrichtung wenigstens ein Transfer-Gate (39) umfasst, um elektrische Ladung von dem Detektorelement (15) zu einem Ausleseknoten (41) zu transferieren, und eine Rücksetzeinrichtung (45), um eine in dem Ausleseknoten (41) oder dem Detektorelement (15) vorhandene Ladung auf einen Referenzwert rückzusetzen;
wobei die Steuereinrichtung (253) dazu ausgelegt ist, die Auswahleinrichtung (47) eines jeweiligen Pixels nach einem Aktivieren der Rücksetzeinrichtung (45) dieses Pixels (11) zu aktivieren, um ein Referenzwert-Messsignal aus diesem Pixel (11) auszulesen, und die Auswahleinrichtung (47) dieses Pixels (11) nach dem Anlegen eines Transfer-Steuersignals an das Transfer-Gate (39) dieses Pixels (11) zu aktivieren, um ein Signalwert-Messsignal aus diesem Pixel (11) auszulesen.

5. Bildsensor nach Anspruch 4,
**dadurch gekennzeichnet,**
**dass** die Steuereinrichtung (53, 253) dazu ausgelegt ist, aus dem zweiten Pixel (11) das Referenzwert-Messsignal nach dem Auslesen des Referenzwert-Messsignals aus dem ersten Pixel (11) und vor dem Auslesen des Signalwert-Messsignals aus dem ersten Pixel (11) auszulesen;
und/oder
**dass** die Steuereinrichtung (53) dazu ausgelegt ist, aus einem dritten Pixel (11) das Referenzwert-Messsignal nach dem Auslesen des Signalwert-Messsignals aus dem ersten Pixel (11) und vor dem Auslesen des Signalwert-Messsignals aus dem zweiten Pixel (11) auszulesen.

6. Bildsensor nach Anspruch 4 oder 5,
**dadurch gekennzeichnet,**
**dass** die gemeinsame Spaltenleitung (17) mit einer von der Steuereinrichtung (53, 253) steuerbaren Spaltenverstärkerschaltung (13) verbindbar ist, die einen Verstärker (31), ferner einen mit einem ersten Eingang (35) des Verstärkers (31) verbundenen oder verbindbaren ersten Signalspeicher (33) zum Speichern des Signalwert-Messsignals und zumindest zwei wahlweise mit einem zweiten Eingang (37) des Verstärkers (31) verbindbare zweite Signalspeicher (27A, 27B) zum Speichern des Referenzwert-Messsignals umfasst, wobei die gemeinsame Spaltenleitung (17) wahlweise mit dem ersten oder mit einem der zweiten Signalspeicher (27A, 27B, 33) verbindbar ist.

7. Bildsensor nach Anspruch 6,
**dadurch gekennzeichnet,**
**dass** die zweiten Signalspeicher (27A, 27B) dazu ausgelegt sind, das aus dem ersten Pixel (11) ausgelesene Referenzwert-Messsignal zumindest solange zwischenzuspeichern, bis auch das Referenzwert-Messsignal aus dem zweiten Pixel (11) ausgelesen ist;
wobei die Steuereinrichtung (53, 253) vorzugsweise dazu ausgelegt ist, das zwischengespeicherte Referenzwert-Messsignal des ersten Pixels (11) gleichzeitig mit oder unmittelbar vor oder unmittelbar nach dem Signalwert-Messsignal des ersten Pixels (11) an den Verstärker (31) zu übermitteln.

8. Bildsensor nach einem der vorhergehenden Ansprüche,
**dadurch gekennzeichnet,**
**dass** die gemeinsame Spaltenleitung (17) mit einer von der Steuereinrichtung (253) steuerbaren Auswerteschaltung (19) verbunden oder verbindbar ist, welche zum unmittelbaren Digitalisieren der von der Spaltenleitung (17) empfangenen Messsignale ausgelegt ist, wobei die digitalisierten Messsignale für eine nachfolgende Verarbeitung zwischenspeicherbar sind.

9. Verfahren zum Auslesen eines Bildsensors, insbesondere eines CMOS-Bildsensors, für elektronische Kameras, wobei der Bildsensor eine Vielzahl von in Zeilen und Spalten angeordneten Pixeln (11) umfasst, wobei mehreren Pixeln (11) einer Spalte wenigstens eine gemeinsame Spaltenleitung zugeordnet ist, wobei in jedem Pixel (11)
- aufgrund einer belichtungsabhängig erzeugten elektrische Ladung ein Messignal erzeugt wird, und
- das Messsignal an die zugeordnete Spaltenleitung (17) ausgegeben wird;
**dadurch gekennzeichnet,**
**dass** in einem ersten der Pixel (11) das Messsignal an die zugeordnete Spaltenleitung (17) innerhalb eines Zeitraums ausgegeben wird, in dem in einem zweiten der Pixel, dem dieselbe Spaltenleitung (17) zugeordnet ist, zumindest ein Schaltvorgang erfolgt.

10. Verfahren nach Anspruch 9,
**dadurch gekennzeichnet,**
**dass** der zumindest eine Schaltvorgang umfasst:
- ein Transferieren der belichtungsabhängig erzeugten elektrischen Ladung von einem Detektorelement (15) an einen Ausleseknoten (41), und/oder
- ein Rücksetzen einer in dem Ausleseknoten (41) oder dem Detektorelement (15) vorhandenen elektrischen Ladung auf einen Referenzwert.

11. Verfahren nach Anspruch 9 oder 10,
**dadurch gekennzeichnet,**
**dass** innerhalb des genannten Zeitraums zusätzlich in einem dritten Pixel (11) ein Schaltvorgang durchgeführt wird, insbesondere eine in einem Ausleseknoten (41) vorhandene Ladung rückgesetzt wird.

12. Verfahren nach Anspruch 10,
**dadurch gekennzeichnet,**
**dass** nach dem Rücksetzen der elektrischen Ladung auf den Referenzwert in dem jeweiligen Pixel ein Referenzwert-Messsignal aus diesem Pixel (11) ausgelesen wird, und nach dem Transferieren der elektrischen Ladung an den Ausleseknoten (41) des jeweiligen Pixels (11) ein Signalwert-Messsignal aus diesem Pixel (11) ausgelesen wird.

13. Verfahren nach Anspruch 12,
**dadurch gekennzeichnet,**
**dass** aus dem zweiten Pixel (11) das Referenzwert-Messsignal nach dem Auslesen des Referenzwert-Messsignals aus dem ersten Pixel (11) und vor dem Auslesen des Signalwert-Messsignals aus dem ersten Pixel (11) ausgelesen wird.

14. Bildsensor, insbesondere CMOS-Bildsensor, für elektronische Kameras,
mit einer Vielzahl von in Zeilen und Spalten angeordneten Pixeln (11), wobei mehreren Pixeln einer Spalte wenigstens eine gemeinsamen Spaltenleitung (17) zugeordnet ist und wobei ein jedes Pixel (11) umfasst:
ein lichtempfindliches Detektorelement (15), um aus einfallendem Licht elektrische Ladung zu erzeugen,
eine Auswahleinrichtung (47), um das Detektorelement (15) direkt oder indirekt mit der zugeordneten Spaltenleitung (17) zu verbinden,
und
zumindest eine Schalteinrichtung (39, 45); und
ferner mit einer Steuereinrichtung (53, 253) zum Steuern der Auswahleinrichtung (47) und der zumindest einen Schalteinrichtung (39, 45) des jeweiligen Pixels (11);
**dadurch gekennzeichnet,**
**dass** die Steuereinrichtung (53, 253) dazu ausgelegt ist, aus einem ersten der Pixel (11) durch Aktivieren der jeweiligen Auswahleinrichtung (47) ein Messsignal an die zugeordnete Spaltenleitung (17) innerhalb eines Zeitraums auszugeben, in dem in einem zweiten der Pixel (11), dem dieselbe Spaltenleitung (17) zugeordnet ist wie dem ersten Pixel, durch Aktivieren der zumindest einen Schalteinrichtung (39, 45) des zweiten Pixels (11) eine Verteilung von elektrischer Ladung innerhalb des zweiten Pixels (11) geändert wird;
wobei durch das Aktivieren der zumindest einen Schalteinrichtung (39, 45) des zweiten Pixels (11) vorzugsweise eine elektrische Ladung in dem Detektorelement (15) oder in einem Ausleseknoten (41) des zweiten Pixels (11) gelöscht wird oder eine in dem Detektorelement (15) des zweiten Pixels (11) erzeugte elektrische Ladung zu einem Ausleseknoten (41) des zweiten Pixels (11) transferiert wird.

15. Verfahren zum Auslesen eines Bildsensors, insbesondere eines CMOS-Bildsensors, für elektronische Kameras, wobei der Bildsensor eine Vielzahl von in Zeilen und Spalten angeordneten Pixeln (11) umfasst, wobei mehreren Pixeln (11) einer Spalte wenigstens eine gemeinsame Spaltenleitung zugeordnet ist, wobei in jedem Pixel (11)
- für einen jeweiligen Belichtungsvorgang des Bildsensors mehrere Messsignale erzeugt werden, und
- die Messsignale in einem jeweiligen Ausleseschritt an die zugeordnete Spaltenleitung (17) ausgegeben werden;
**dadurch gekennzeichnet,**
**dass** für einen einzigen Belichtungsvorgang des Bildsensors in einem ersten der Pixel (11) mehrere Ausleseschritte (R1, S1) durchgeführt werden, um mehrere Messsignale des ersten Pixels nacheinander an die zugeordnete Spaltenleitung (17) auszugeben, wobei zwischen den Ausleseschritten (R1, S1) des ersten Pixels wenigstens ein Ausleseschritt (R2) in einem zweiten der Pixel (11) durchgeführt wird, bei dem für denselben Belichtungsvorgang ein Messsignal des zweiten Pixels an die zugeordnete Spaltenleitung (17) ausgegeben wird.
